Europäisches Patentamt

European Patent Office

Office européen des brevets

(19)

(11) Numéro de publication: **0 080 413**
**A1**

(12) # DEMANDE DE BREVET EUROPEEN

(21) Numéro de dépôt: **82402106.7**

(22) Date de dépôt: **18.11.82**

(51) Int. Cl.³: **C 09 D 5/00**

(30) Priorité: **19.11.81 FR 8121672**

(43) Date de publication de la demande: **01.06.83**
**Bulletin 83/22**

(84) Etats contractants désignés: **AT BE CH DE GB IT LI LU NL SE**

(71) Demandeur: **Salkin, André, 134 avenue du 14 juillet, F-76300 Sotteville les Rouen (FR)**

(72) Inventeur: **Salkin, André, 134 avenue du 14 juillet, F-76300 Sotteville les Rouen (FR)**

(74) Mandataire: **Derambure, Christian, BUGNION ASSOCIES 116, boulevard Haussmann, F-75008 Paris (FR)**

(54) **Agent de protection d'une surface et surface protégée par cet agent.**

(57) L'invention concerne un agent de protection de surface.

Un tel agent de protection est caractérisé par le fait qu'il contient au moins:

a) de préférence de 30 à 70% de solvant ou mélange de solvant,

b) de préférence de 0,2 à 25% de polymère filmogène hygroscopique,

c) de préférence de 0,001 à 50% d'un inhibiteur de corrosion.

Le polymère filmogène hygroscopique est par example la polyvinylpyrrolidone et l'inhibiteur de corrosion est par exemple un sulfonate de métal alcalino terreux sous forme de gel thixotrope.

Application à la protection de produits semi-finis ou finis notamment dans l'industrie automobile.

EP 0 080 413 A1

ACTORUM AG

1

## Agent de protection d'une surface et surface protégée par cet agent.

L'invention concerne une surface protégée notamment contre la corrosion, son procédé d'obtention et l'agent de protection d'une telle surface.

On connaît de nombreux procédés de protection notamment de métaux contre la corrosion, à savoir les traitements chimiques de surface qui visent à modifier la structure de la matière traitée et l'application de revêtements. Il existe deux types de revêtements. Premièrement les peintures qui ont pour but de séparer la surface à protéger de l'air et de l'eau ambiants et deuxièmement les revêtements d'inhibiteurs en formulation qui ont une action chimique et physique bloquant la corrosion ou l'oxydation.

On connaît aussi des revêtements temporaires permettant de protéger des surfaces métalliques. Après un certain temps d'application, la surface enduite peut être décapée par simple lavage. Ces produits sont à base de produits colloïdaux absorbant l'humidité contenant des nitrites hydrosolubles. Par absorption d'eau, il se forme une solution concentrée de produit anticorrosif à base de nitrite. La caractéristique essentielle de telles compositions et qu'elles sont temporaires et que la protection d'une surface se fait si cette surface n'est pas en contact direct avec l'eau.

On connaît par ailleurs des compositions comprenant une dispersion d'un polymère organique et d'un sel de zirconium. Les pellicules formées à partir de ces dispersions n'absorbent pas l'eau. Les couches sont imperméables à l'eau et à l'air. D'autres compositions connues sont formées à partir de chrome hexavalent ou trivalent en solution dans une solution aqueuse acide et comprenant un copolymère d'acide maléique ou d'anhydride maléique soluble dans la solution aqueuse. Les couches obtenues sont imperméables.

Ainsi, les couches protectrices connues sont soit temporaires et absorbent l'eau, soit permanentes et imperméables à l'eau.

La présente invention, de façon surprenante concerne des agents de protection permanents d'une surface, perméables à l'air et hygroscopiques.

L'invention concerne donc un produit de protection permanente qui contient un inhibiteur. Ce produit sous forme de pellicule est obtenu à partir d'une solution dans un solvant d'un ou plusieurs inhibiteurs, solution à laquelle on ajoute un polymère hygroscopique. Le polymère a pour fonction de laisser disponible l'activité des inhibiteurs en présence des milieux oxydants. En effet, si le polymère qui forme la couche au-dessus du produit à protéger n'est pas hygroscopique, c'est-à-dire qu'il n'absorbe pas l'eau, les molécules des inhibiteurs sont entourées hermétiquement par les macromolécules et l'oxygène et l'hydrogène, les rayons ultra-violets et infra-rouges ne parviennent pas jusqu'aux inhibiteurs qui ne peuvent jouer leur rôle. Au contraire, si la couche de polymère absorbe l'eau, les agents de corrosion parviennent jusqu'à l'inhibiteur. Ainsi, si ce dernier est par exemple bactério-actif, les bactéries parviennent jusqu'à lui et sont tuées.

La couche est de plus perméable à l'air et on peut régler
cette perméabilité par association des polymères hygroscopiques avec des macromolécules non hygroscopiques en plus
ou moins grandes quantités dans le mélange. L'objet de
l'invention est donc de laisser le ou les inhibiteurs
de corrosion disponibles et de ne pas les bloquer par
une couche non hygroscopique et non perméable.

L'invention propose un nouvel agent permanent de protection
de surface, contenant au moins un solvant ou mélange de
solvants, un polymère ou un copolymère ou un mélange de
ceux-ci éventuellement filmogène et hygroscopique, soluble dans le solvant associé éventuellement à des macromolécules non hygroscopiques et un inhibiteur de corrosion.

De préférence, cet agent contient notamment :
a) de 30 à 70 % de solvant ou mélange de solvant.
b) de 0,2 à 25 % de polymère filmogène hygroscopique.
c) de 0,001 à 50 % d'un inhibiteur de corrosion.

Le polymère filmogène hygroscopique est choisi dans le
groupe formé par la polyvinylpyrrolidone, les copolymères
de vinylpyrrolidone et d'acétate de vinyle, les esters
partiels des copolymères d'anhydride maléique avec un
éther vinylméthylique, les copolymères d'acide vinylique
et d'acide crotonique, les copolymères d'acétate de
vinyle et d'un acide organique.

Le solvant peut être choisi dans le groupe formé par
l'eau, les alcools éthyliques, les alcools méthyliques,
les solvants halogènes, les solvants aromatiques, les
solvants aliphatiques, les glycols, les cétones.

L'inhibiteur de corrosion est par exemple un sulfonate
de métal alcalino-terreux sous forme de gel thixotrope.

0080413

L'invention concerne en outre un procédé de protection d'une surface, tel qu'on dépose une couche d'un agent de protection définie ci-dessus, on fait évaporer le solvant pour obtenir une couche superficielle hygroscopique et perméable à l'air, adhérente à la surface.

L'invention concerne par ailleurs une surface revêtue d'une couche formée par évaporation d'un solvant d'un tel agent de protection.

La couche de protection selon l'invention est remarquable par le fait que contrairement aux couches de protection de la technique antérieure, elle est hygroscopique, c'est à dire qu'elle absorbe une certaine quantité d'humidité, et qu'elle est perméable à l'air. Ainsi, l'action de l'inhibiteur de corrosion n'est pas bloquée. L'inhibiteur de corrosion agit dans toute l'épaisseur de la couche de protection. De plus, elle est adhérente à la surface qu'elle recouvre et permet un revêtement supplémentaire, par exemple de peinture, qui lui-même reste adhérent.

On peut utiliser l'agent de protection pour toutes surfaces métalliques et alliages métalliques. Le domaine d'application s'étend des produits sous forme de feuilles, laminés, jusqu'aux produits semi-finis et finis.

L'agent de protection peut contenir en outre des plastifiants, colorants, pigments, agents tensio-actifs, des polymères non hygroscopiques. La couche protectrice obtenue par évaporation du solvant peut être utilisée comme sous-couche, apprêt, apprêt avant peinture, ou en tant que peinture.

L'application de l'agent de protection sur une surface peut être faite par projection, trempage, à la brosse ou au pinceau. Puis on fait évaporer le solvant, soit en le laissant à la température ambiante, soit en le soumettant à une température plus ou moins élevée.

La description suivante en regard des exemples permettra d'illustrer quelques modes de réalisation de l'invention. Ces modes de réalisation ne sont pas limitatifs et on peut prévoir d'autres mélanges spécifiques pour chaque type d'application.

EXEMPLE 1.

On prépare un mélange comprenant :

| | | |
|---|---|---|
| Solvant | 26, 25 % | de white spirit |
| | 8, 75 % | de butylglycol |
| Polymère filmogène hygroscopique | 8, 75 % | de polyvinylpyrrolidone K 30 (poids moléculaire 40.000) |
| Inhibiteur | 35, 50 % | de sulfate de calcium thixotrope basique du type "SACI 700" fabriqué suivant le brevet américain n° 3 816 310. |
| Polymère additif | 16, 25 % | du type "ESCOREZ" fabriqué par ESSO. |
| Additif | 4, 50 % | de "Petrolatum oxyde WH 1" fabriqué par "WITCO". |

On déposé cet agent de protection sur une tôle de métal ferreux, par brossage. Puis, on laisse évaporer le solvant à 25°C. L'épaisseur de la couche est de 125µ environ.

EXEMPLE 2.

On prépare un mélange semblable au mélange de l'exemple 1.

On ajoute un agent propulseur et on recouvre une tôle d'acier par pistolet. La couche qui sèche à l'air a une épaisseur de 95µ environ.

On applique sur celle-ci une peinture non hygroscopique et non perméable à l'air telle qu'utilisée dans l'industrie automobile. La peinture reste adhérente sur la couche protectrice intermédiaire.

EXEMPLE 3

On prépare un mélange comprenant :

| | | |
|---|---|---|
| Solvant | 38, 50 % | de white spirit |
| | 4, 50 % | de butylglycol |
| Polymère filmogène hygroscopique | 4, 50 % | de polyvinylpyrrolidone K15 (poids moléculaire 10 000). |
| Inhibiteur | 37, 50 % | de sulfate de calcium thixotrope basique du type "SACI 700" fabriqué suivant le brevet américain n° 3 816 310 |
| Polymère additif | 7, 50 % | du type "ESCOREZ" fabriqué par ESSO |
| Cire | 7, 50 % | du type "WITOWAR 146" fabriqué par WITCO. |

On dépose cet agent de protection sur une tôle de métal ferreux, par trempage. Puis on fait évaporer le solvant à 45°C. L'épaisseur de la couche est de 90 µ environ. La couche de revêtement protecteur reste adhérente.

EXEMPLE 4

On prépare un mélange comprenant :

Solvant                 ~~, ~~ % de white spirit

4, 00 % de butylglycol.


Polymère filmogène      3, 00 % de polyvinylpyrrolidone K60
hygroscopique                  (poids moléculaire 160 000).


                               de sulfate de calcium thixo-
Inhibiteur              35, 00 % trope basique du type "SACI
                               700" fabriqué suivant le bre-
                               vet américain n° 3 816 310.


Polymère additif        11, 00 % du type "ESCOREZ" fabriqué
                               par ESSO


Cire                     6, 00 % du type "WITOWAR 146" fabri-
                               qué par "WITCO"


Solvant additif          4, 50 % de "Petrolatum 816" fabriqué
                               par "WITCO".

On ajoute à cet agent de protection un pigment rouge.
On obtient après dépôt par pulvérisation sur une tôle,
puis évaporation , une couche semblable à un vernis.
L'adhérence du revêtement anticorrosion est excellente.


L'invention ne se limite pas à ces formes de réalisation.
On peut ajouter à l'agent de protection selon l'invention
les additifs désirés tels que tensio-actifs, matières
minérales ou organiques, solvants, charges minérales ou
autres polymères et copolymères, à condition toutefois
que la couche protectrice sèche de revêtement soit hygroscopique et perméable à l'air.


Dans certains cas, la couche protectrice peut être revêtue
d'un film non hygroscopique et non perméable à l'air.

Revendications de brevet.

1/ Agent de protection permanent de surface, caractérisé par le fait qu'il contient au moins :

a) un solvant ou mélange de solvants.

b) un polymère ou un copolymère ou un mélange de ceux-ci, hygroscopique et éventuellement filmogène, soluble dans le solvant associé éventuellement à des macromolécules non hygroscopiques.

c) un inhibiteur de corrosion.

2/ Agent selon la revendication 1, caractérisé par le fait qu'il contient notamment :

a) de 30 à 70 % de solvant ou mélange de solvant,

b) de 0,2 à 25 % de polymère filmogène hygroscopique,

c) de 0,001 à 50 % d'un inhibiteur de corrosion.

3/ Agent selon l'une quelconque des revendications 1 et 2, caractérisé par le fait que le polymère filmogène hygroscopique, est choisi dans le groupe formé par la polyvinylpyrrolidone, les copolymères de vinylpyrrolidone et d'acétate de vinyle, les esters partiels des copolymères d'anhydride maléique avec un éther vinylméthylique, les copolymères d'acide vinylique et d'acide crotonique, les copolymères d'acétate de vinyle et d'un acide organique.

4/ Agent selon l'une quelconque des revendications 1 à 3, caractérisé par le fait que le solvant est choisi dans le groupe formé par l'eau, les alcools éthyliques, les alcools méthyliques, les cétones, les solvants halogénés, les solvants aromatiques, les solvants aliphatiques, les glycols.

5/ Agent selon l'une quelconque des revendications 1 à 4, caractérisé par le fait que l'inhibiteur de corrosion est un sulfonate de métal alcalino-terreux sous forme de gel thixotrope.

0080413

6/ Procédé de protection permanente d'une surface suivant lequel on dépose une couche d'un agent de protection contenant au moins :
a) un solvant ou mélange de solvants.
b) un polymère ou copolymère ou un mélange de ceux-ci, hygroscopique et éventuellement filmogène, soluble dans le solvant, associé éventuellement à des macromolécules non hygroscopiques,
c) un inhibiteur de corrosion,
on fait évaporer le solvant pour obtenir une couche superficielle hygroscopique et perméable à l'air, adhérente à la surface.

7/ Procédé selon lequel on dépose un agent de protection suivant l'une quelconque des revendications 1 à 5, puis on fait évaporer le solvant pour obtenir une couche superficielle hygroscopique, perméable à l'air et adhérente à la surface.

8/ Surface protégée, notamment contre la corrosion, caractérisée par le fait qu'elle est revêtue d'une couche hygroscopique et perméable à l'air formée par évaporation du solvant d'un agent de protection contenant au moins :
a) un solvant ou mélange de solvants,
b) un polymère ou copolymère ou un mélange de ceux-ci, filmogène et hygroscopique, soluble dans le solvant.
c) un inhibiteur de corrosion.

9/ Surface protégée notamment contre la corrosion, revêtue d'une couche hygroscopique et perméable à l'air formée par évaporation du solvant d'un agent de protection selon l'une quelconque des revendications 2 à 5.

10/ Surface protégée selon l'une quelconque des revendications 8 et 9, caractérisée par le fait qu'elle comporte un sur-revêtement non hygroscopique et non perméable à l'air.

GO80413

Office européen
des brevets

**RAPPORT DE RECHERCHE EUROPEENNE**

Numéro de la demande

EP 82 40 2106

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | C 09 D 5/00 |
| X | FR-A-1 359 621 (H.BRUNEL)<br><br>*Le résumé; page 1, colonne 1, paragraphe 2; page 1, colonne 1, paragraphe 5 - colonne 2, paragraphe 1; page 1, colonne 2, paragraphe 4* | 1,2,4, 6-10 | |
| | --- | | |
| X | FR-A-2 236 907 (AMCHEM)<br><br>*Les revendications 1,4* | 1,2,3, 4,6-10 | |
| | --- | | |
| X | GB-A- 994 062 (YAWATA IRON)<br><br>*Les revendications 1,2; page 1, colonne 2, lignes 53-75* | 1,4,6-10 | |
| | ----- | | DOMAINES TECHNIQUES RECHERCHES (Int. Cl. ³)<br><br>C 09 D |

Le présent rapport de recherche a été établi pour toutes les revendications

| Lieu de la recherche<br>LA HAYE | Date d'achèvement de la recherche<br>08-02-1983 | Examinateur<br>DE ROECK R.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82